# EUROPÄISCHE PATENTANMELDUNG

(11) **EP 3 357 839 A1**
(43) Veröffentlichungstag der Anmeldung: **08.08.2018**
(21) Anmeldenummer: 17154401.8
(22) Anmeldetag: 02.02.2017
(51) Int. Cl.: B65G 13/10

(54) **VERFAHREN UND FÖRDERSYSTEM ZUM MANIPULIEREN EINES URSPRÜNGLICHEN GÜTERSTROMS**

(71) Anmelder: Siemens Aktiengesellschaft, 80333 München (DE)
(72) Erfinder: BERDELLE-HILGE, Peter, 78464 Konstanz (DE); ASCHPURWIS, Carsten, 78464 Konstanz (DE); SCHAD, Jürgen, 78465 Konstanz (DE); FROEHLICH, Thomas, 78476 Allensbach (DE)
(74) Vertreter: Maier, Daniel Oliver

(57) **Zusammenfassung**

Die Erfindung offenbart ein Fördersystem (1) und ein Verfahren zum Manipulieren eines ursprünglichen Güterstroms auf einer Förderstrecke (3) des Fördersystems (1). Das Fördersystem (1) weist einen Förderstreckenabschnitt (13) auf, der mindestens eine für den Transport des Güterstroms vorgesehene Fördereinheit (2) umfasst. Die Fördereinheit (2) umfasst Transportrollen (8), die jeweils eigene Drehachsen (10) und Schwenkachsen (12) aufweisen und mit einstellbarer Drehzahl und einstellbarer Drehrichtung um ihre jeweiligen Drehachsen (10) rotierbar sind. Die Drehachsen (10) der Transportrollen (8) sind um ihre jeweiligen Schwenkachsen (12) um einen eigenen Schwenkachsenwinkel (14) durch Rotation verstellbar. Die Fördereinheit (2) ist so ansteuerbar, dass mindestens zwei der Transportrollen (8) einer Fördereinheit (2) voneinander abweichend verstellbar sind. Das Fördersystem (1) umfasst eine Steuereinrichtung (21), die zum derartigen Ansteuern der Fördereinheit (2) ausgestaltetet ist, dass der ursprüngliche Güterstrom in einen geordneten Güterstrom überführbar ist. Zunächst wird der ursprüngliche Güterstrom erfasst. Anschließend wird der Güterstrom zumindest teilweise dem Förderstreckenabschnitt (13) zugefördert und die Fördereinheiten (2) werden so angesteuert, dass der ursprüngliche Güterstrom auf dem Förderstreckenabschnitt (13) in einen geordneten Güterstrom überführt wird und der geordnete Güterstrom wird abtransportiert.

## Beschreibung

Die vorliegende Erfindung betrifft das technische Gebiet der Fördersysteme für Güter, insbesondere Fördersysteme, die ein gerichtetes Fördern, eine Veränderung der Ausrichtung und ein Zwischenspeichern von Gütern erlauben.

Im Gütertransport, insbesondere beim Handling in Paket- und Gepäckabfertigungsanlagen gibt es immer wieder Situationen, in denen ein unstetiger ursprünglicher Güterstrom in einen gleichmäßigen Güterstrom umzuwandeln ist. Dabei können Zustände auftreten, bei denen der ursprüngliche Güterstrom zeitweise extrem abweichende Durchsätze liefert und eine weiter hinten im Fluss liegende Funktion eine nur eingeschränkte Durchsatzfähigkeit hat. Wenn dann die Förderstrecke keine oder nur eine unzureichende Puffer-Funktion beinhaltet, dann wird die zuführende Förderstrecke gegebenenfalls bis zum Stillstand abgebremst oder die Funktion ist in der schwachen Phase nicht ausgelastet. Erstrebenswert ist aber ein dynamischer Ausgleich von Durchsätzen, um den Systemdurchsatz auf einem Maximum zu halten. Eine Sonderform dieser Anwendung ist das Wandeln eines unregelmäßigen Stroms in einen Strom, bei dem einzelne Güter mit einem definierten Abstand zum nächsten Gut eingestellt werden bzw. zu einem bestimmten Zeitpunkt mit einer bestimmten Orientierung an eine bestimmte Position der Förderstrecke gefördert werden. Das kann beispielsweise auch bedeuten, dass diese Güter die Förderstrecke zur Seite hin in einem bestimmten Winkel und Orientierung verlassen. Ebenso gibt es Situationen, beispielsweise bei ineinander mündenden Förderstrecken, in denen ein beliebiger Strom gestoppt oder zumindest aufgestaut werden muss. Stand der Technik ist die Verwendung einer Puffervorrichtung, die systematisch einlagert und mit geregeltem Durchsatz abgeben kann. Eine Puffervorrichtung hat jedoch nur eine begrenzte Pufferkapazität, so dass bewegliche Puffervorrichtungen gegebenenfalls durch neue, leere Puffervorrichtungen ersetzt werden müssen, um die erforderliche Pufferkapazität zur Verfügung zu stellen. In manchen Situationen muss daher der Güterstrom dennoch gestoppt werden. Bei ineinander mündenden Förderstrecken können auch Bereiche der verbindenden Fördertechnik als Puffervorrichtung dienen, indem Bereiche der ineinander münden Förderstrecken als Speicherstrecke ausgeführt werden, wobei die Güter als verdichtete eindimensionale Kette gespeichert werden. Der auf der Speicherstrecke verdichtete Güterstrom kann hierbei stückbezogen wieder aufgelöst werden, allerdings erfordert diese Lösung lange Förderstrecken und verbraucht somit viel Fläche, so dass die Pufferkapazität aufgrund der nur begrenzt zur Verfügung stehende Speicherstrecke eingeschränkt ist. Oder es kommt eine Puffervorrichtung zum Einsatz, in die verdichtet gefördert werden kann, beispielsweise eine Rutsche, aus der aber dann mit erhöhtem Aufwand vereinzelt entnommen werden muss.

Fördersysteme, die ein individuelles gerichtetes Fördern erlauben, eignen sich typischerweise außer als den zur Verfügung stehenden Raum ausnutzende Speicherstrecken nicht als Puffervorrichtung, da meist über die gesamte Breite der Förderstrecke nur eine einzige Transportrichtung einstellbar ist. Darüber hinaus kann meist nur diskret zwischen zwei oder drei Transportrichtungen ausgewählt werden. Zum umfangreichen Manipulieren eines ursprünglichen Güterstroms müssen daher bislang mehrere verschiedenartig ausgestaltete Vorrichtungen herangezogen werden.

Der vorliegenden Erfindung liegt daher die Aufgabe zugrunde, ein Verfahren und ein Fördersystem zum umfangreichen Manipulieren eines ursprünglichen Güterstroms bereitzustellen. Diese Aufgabe wird durch die in den unabhängigen Ansprüchen beschriebenen Lösungen gelöst.

Die erfindungsgemäße Lösung sieht ein Verfahren zum Manipulieren eines ursprünglichen Güterstroms auf einer Förderstrecke eines Fördersystems vor, wobei die Förderstrecke einen Förderstreckenabschnitt aufweist, der mindestens eine für den Transport des Güterstroms vorgesehene Fördereinheit umfasst. Die Fördereinheit umfasst Transportrollen, die jeweils eigene Drehachsen und Schwenkachsen aufweisen und mit einstellbarer Drehzahl und einstellbarer Drehrichtung um ihre jeweiligen Drehachsen rotierbar sind und die Drehachsen der Transportrollen sind um ihre jeweiligen Schwenkachsen um einen eigenen Schwenkachsenwinkel durch Rotation verstellbar. Die Fördereinheit ist so ansteuerbar, dass mindestens zwei der Transportrollen einer Fördereinheit voneinander abweichend verstellbar sind. Das Verfahren umfasst die Verfahrensschritte:
a) der ursprüngliche Güterstrom wird erfasst;
b) der Güterstrom wird zumindest teilweise dem Förderstreckenabschnitt zugefördert;
c) die Fördereinheiten werden so angesteuert, dass der ursprüngliche Güterstrom in einen geordneten Güterstrom überführt wird; und
d) der geordnete Güterstrom wird in Abförderrichtung transportiert.

Unter einem Güterstrom sollen insbesondere kommissionierbare Güter, beispielsweise Pakete, Päckchen oder Postsendungen, sowie Koffer und Gepäckstücke verstanden werden. Ein Güterstrom umfasst zumindest ein Gut, vorzugsweise aber eine veränderliche Menge von vorzugsweise gleichartigen Gütern. Das Manipulieren umfasst eine Beeinflussung des Güterstroms über das normale Fördern hinweg: Abbremsen und Beschleunigen, Puffern, Vereinzeln, Spurwechsel durch Lenken, Rotieren im Stillstand oder im laufenden Transport, Ausschleusen, paralleles Ausschleusen mehrerer Güter, Ausschleusen an einem bestimmten Punkt mit gleichzeitigem Ausrichten, Einschleusen, Kreuzungsfunktion, gezieltes Verschieben von Lücken zwischen Gütern, Verändern der Güterabfolge und mehr. Das Manipulieren erzeugt einen geordneten Güterstrom. Der ursprüngliche Güterstrom umfasst eine Menge an Gütern mit variabler Ankunft, Fördergeschwindigkeit, Ausrichtung, Abmessung und/ oder Orientierung. Wenn der ursprüngliche Güterstrom bereits mit den Anforderungen an den geordneten Güterstrom übereinstimmt, soll unter Manipulieren auch ein einfaches lineares Geradeausfördern des Güterstroms verstanden werden. Der Begriff geordneter Güterstrom umfasst gegebenenfalls voneinander abweichende Anordnungen der Güter auf dem Förderstreckenabschnitt und beim Transportieren der Güter in Abförderrichtung und verdeutlicht, dass eine bestimmte Ordnung der Güter zueinander hinsichtlich ihrer relativen Position und Ausrichtung zum Fördersystem und ihrer Fördergeschwindigkeit vorliegt.

Um ein vielfältiges Manipulieren zu ermöglichen, kann der Förderstreckenabschnitt zwei oder mehr koordiniert ansteuerbare Fördereinheiten umfassen. Die Fördereinheiten können beliebig entlang dem Förderstreckenabschnitt angeordnet sein, also hintereinander und/ oder nebeneinander angeordnet sein, sowie ausgerichtet und/ oder in beliebigen Winkel zum Förderstreckenabschnitt. So kann der Bereich, in dem der Güterstrom manipuliert wird, vergrößert werden, was insbesondere bei klein oder länglich dimensionierten Fördereinheiten sinnvoll ist. So können je nach Anordnung und Ausmaßen der Fördereinheiten Durchsatz und somit Effizienz des Förderstreckenabschnitts durch gleichzeitiges Manipulieren mehrerer nachfolgender Güter gesteigert werden und/ oder es können kompliziertere Manipuliermanöver durchgeführt werden.

Unter voneinander abweichend verstellbaren Transportrollen soll hierbei eine individuelle Verstellbarkeit von einzelnen Transportrollen oder von Transportrollengruppen verstanden werden bezüglich der Parameter Drehzahl, Drehrichtung und Schwenkachsenwinkel, wobei die individuelle Einstellbarkeit alle, zwei oder nur einen der Parameter umfassen kann. Die Verstellbarkeit der Drehzahl umfasst sowohl Drehgeschwindigkeit, als auch Drehrichtung. Die prinzipiell mögliche individuelle Verstellbarkeit umfasst auch eine gleiche Ansteuerung einzelner oder aller dieser Parameter.

Gemäß einer Ausführungsform können die Transportrollen in positiver und/ oder negativer Drehrichtung und mit übereinstimmender und/ oder unterschiedlicher Drehzahl angesteuert werden. Dies erlaubt ein Rotieren und/ oder Ausrichtungsveränderung der Güter mit nur einer Fördereinheit oder mit mehreren Fördereinheiten ohne dass eine voneinander abweichende Einstellung der Transportrichtung der Transportrollen einer Fördereinheit erforderlich ist.

Gemäß einer Ausführungsform kann die Drehachse im Wesentlichen parallel zur Hauptförderrichtung angeordnet sein und die Schwenkachse kann im Wesentlichen orthogonal zur Hauptförderrichtung angeordnet sein. Dies erleichtert die Ansteuerung der Fördereinheit, da die Bestimmung der Transportrichtung einer Transportrolle beim Verstellen direkt mit dem Schwenkachsenwinkel korreliert. Auch erlaubt dies, dass die Transportrollen umlaufende, zylindermantelartige oder ballige Oberflächen aufweisen können und einen verbesserten Reibschluss zwischen Gut und Transportrolle bieten und so eine besonders effiziente und präzise Kraftübertragung und somit ein besonders zuverlässiges Transportieren ermöglichen.

Um eine reduzierte Bauweise und ein einfaches Ansteuern einer Fördereinheit zu ermöglichen, können die Schwenkachsenwinkel von zwei oder mehr Transportrollen einer Fördereinheit gemeinsam verstellt werden. Durch voneinander abweichende Einstellung der Drehzahl und einstellbarer Drehrichtung unterschiedlicher Transportrollen kann das Gut dennoch weiterhin mit vielen Freiheitsgraden transportiert werden. Die Drehzahl weist Betrag und Vorzeichen auf und definiert somit Rotationsgeschwindigkeit und Rotationsrichtung einer Transportrolle, so dass Einstellung der Drehzahl genau genommen auch eine Einstellung der Drehrichtung umfasst.

Gemäß einer bevorzugten Ausführungsform können die Fördereinheiten in Antwort auf die Erfassung des ursprünglichen Güterstroms angesteuert werden. So kann das Manipulieren zielgerichtet genau auf den jeweiligen ursprünglichen Güterstrom angepasst werden, wobei das Ansteuern manuell und/ oder automatisiert geregelt werden kann.

Um eine Feineinstellung der Transportrichtung einer oder mehrerer Transportrollen zu ermöglichen, können die Schwenkachsenwinkel kontinuierlich einstellbar sein.

Die Transportrollen einer Fördereinheit können mit abnehmender und/ oder zunehmender Drehzahl ansteuerbar sein. Dies ermöglicht ein Abbremsen bzw. Beschleunigen eines Gutes und noch vielfältigere Möglichkeiten des Manipulierens.

Um den Förderstreckenabschnitt zum besonders effizienten Speichern und/ oder Puffern zu verwenden, kann ein zwischenzeitliches Stillstehen einzelner oder aller Transportrollen einer Fördereinheit erfolgen. Wenn das zwischenzeitliche Stillstehen für nur kurze Zeit erfolgt, kann so ebenfalls ein Abstand zwischen nachfolgenden Gütern des Güterstroms eingestellt werden.

Gemäß einer Ausführungsform kann der ursprüngliche Güterstrom eine Zuförderrichtung aufweisen, die nicht mit der Abförderrichtung des geordneten Güterstroms übereinstimmt. Das Manipulieren auf dem Förderstreckenabschnitt kann so das Sortieren, Verteilen und Abtransportieren mit einstellbarer Abförderrichtung umfassen. So kann auch ein gerichtetes Ausschleusen mit kontrollierter Ausrichtung erzielt werden, das beispielsweise im Postbereich bei Crossbelt-Sortern Anwendung findet.

Hinsichtlich einer Vorrichtung wird die vorstehend genannte Aufgabe gelöst durch ein Fördersystem zum Manipulieren eines ursprünglichen Güterstroms entlang einer Förderstrecke des Fördersystems, wobei die Förderstrecke einen Förderstreckenabschnitt aufweist, der mindestens eine für den Transport des Güterstroms vorgesehene Fördereinheit umfasst. Die Fördereinheit umfasst Transportrollen, die jeweils eigene Drehachsen und Schwenkachsen aufweisen und mit einstellbarer Drehzahl und einstellbarer Drehrichtung um ihre jeweiligen Drehachsen rotierbar sind und die Drehachsen der Transportrollen sind um ihre jeweiligen Schwenkachsen um einen eigenen Schwenkachsenwinkel durch Rotation verstellbar. Die Fördereinheit ist so ansteuerbar, dass mindestens zwei der Transportrollen einer Fördereinheit voneinander abweichend verstellbar sind und das Fördersystem umfasst eine Steuereinrichtung, die zum derartigen Ansteuern der Fördereinheit ausgestaltetet ist, dass der ursprüngliche Güterstrom in einen geordneten Güterstrom überführbar ist.

Gemäß einer Ausführungsform kann das Fördersystem zudem eine Detektionseinheit zum Erfassen des ursprünglichen Güterstroms und/ oder des geordneten Güterstroms umfassen. Erfasst werden Position und/ oder Ausrichtung der einzelnen Güter des Güterstroms, wobei eine Anordnung der Detektionseinheit je nach Anwendung nur an einer oder an mehreren Stellen des Fördersystems sinnvoll sein kann.

Um ein auf den ursprünglichen Güterstrom angepasstes Manipulieren der Güter zu ermöglichen, kann die Steuereinrichtung zum Ansteuern der Fördereinheit in Abhängigkeit vom ursprünglichen Güterstrom ausgestaltet sein. So verhindern auch unvorhergesehene Abweichungen des ursprünglichen Güterstroms, die beispielsweise durch unkontrolliertes Gleiten zustande kommen, nicht ein erfolgreiches Überführen in einen geordneten Güterstrom.

Gemäß einer Ausführungsform kann der Förderstreckenabschnitt zwei oder mehr koordiniert ansteuerbare Fördereinheiten umfassen. Dies ermöglicht ein unkompliziertes Skalieren des Förderstreckenabschnitts sowie vielfältiges Manipulieren.

Die Schwenkachsenwinkel können kontinuierlich einstellbar sein, so dass die Einstellung der Transportrichtung der Transportrollen nicht eingeschränkt ist.

Ausführungsformen der Erfindung werden nachfolgend anhand der Figuren beispielsweise näher erläutert. Dabei zeigen:
- Figur 1: ein erfindungsgemäßes Fördersystem umfassend ansteuerbare Fördereinheiten, weitere Fördermittel sowie Detektionseinheiten und eine Steuereinrichtung;
- Figur 2: einen Ausschnitt auf einen Ausschnitt eines Fördersystems;
- Figur 3: eine erfindungsgemäße Fördereinheit mit gemeinsamer Verstellvorrichtung;
- Figur 4: Fördereinheiten mit voneinander abweichenden Transportrichtungen; und
- Figuren 5-9: Fördersysteme mit variierender Anordnung von Fördereinheiten umfassenden Förderstreckenabschnitten und weiteren Förderstrecken zur Erfüllung unterschiedlicher Funktionalitäten beim Manipulieren eines oder mehrerer ursprünglicher Güterströme.

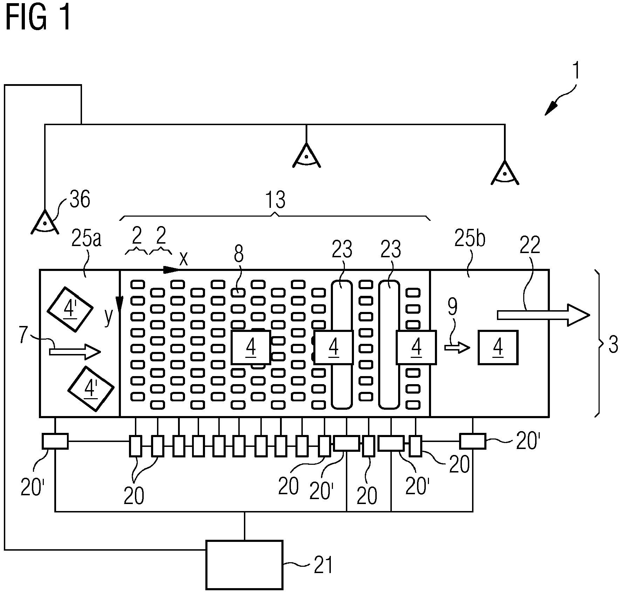

Figur 1 zeigt ein erfindungsgemäßes Fördersystem 1 zum Manipulieren eines ursprünglichen Güterstroms bestehend aus Gütern 4', die entlang einer Förderstrecke 3 im Wesentlichen entlang einer Haupttransportrichtung 22 transportiert werden. Das Fördersystem 1 weist einen Förderstreckenabschnitt 13 auf, auf welchem die Güter 4 als geordneter Güterstrom ausgerichtet und positioniert werden. Das Fördersystem 1 umfasst Detektionseinheiten 36, welche mit einer übergeordneten Steuereinrichtung 21 verbindbar ausgestaltet sind und Position und Ausrichtung der Güter 4' des ursprünglichen Güterstroms entlang der Förderstrecke 3 ganz oder zumindest abschnittsweise erfassen. Zur optischen Überwachung kann die Detektionseinheit 36 als einfache Kamera im VIS-Bereich, als Timeof-Flight-Kamera im nahen IR mit hoher Framerate oder als Stereokamera mit hoher Auflösung ausgestaltet sein. Die Detektionseinheit 36 kann die Güter 4' alternativ auch als Lichttaster oder Lichtschranke detektieren. Das Fördersystem 1 umfasst ein zuführendes Förderband 25a, welches die Güter 4' linear in Zuführförderrichtung 7 dem Förderstreckenabschnitt 13 zufördert und ein abförderndes Förderband 25b, welches die ausgerichteten Güter 4 linear in Abförderrichtung 9 von dem Förderstreckenabschnitt 13 abfördert, wobei hier Zuförderrichtung 7 und Abförderrichtung 9 mit einer Haupttransportrichtung 22 des Förderstreckenabschnitts 13 übereinstimmen. Unter linearem Fördern soll ein alleiniges Fördern des Güterstroms entlang einer Richtung verstanden werden, ohne individualisierte Abbremsung oder Beschleunigung verschiedener, beispielsweise nebeneinander positionierter Güter 4 und ohne Spurwechsel oder Veränderung der Ausrichtung eines Gutes 4 durch überlagerte rotative Bewegungen.

Der Förderstreckenabschnitt 13 umfasst für den Transport und das Manipulieren der Güter 4, 4' vorgesehene Fördereinheiten 2 sowie zwei weitere Rollenmodule 23, die zum linearen Fördern ausgestaltet und hier jeweils orthogonal zur Haupttransportrichtung 22 angeordnet sind. Auf dem Förderstreckenabschnitt 13 wird der ursprüngliche Güterstrom der Güter 4' in einen geordneten Güterstrom der Güter 4 überführt. Die Fördereinheiten 2 umfassen Transportrollen 8, die ballig, kugeloberflächenartig oder zylinderartig ausgestaltet sein können. Im Vergleich zu einer Transportrolle 8 mit zylindermantelartiger Oberfläche ist bei einer Transportrolle 8 mit balliger Oberfläche eine Veränderung des Schwenkachsenwinkels 14 leichter möglich. Außerdem weist eine ballige Oberfläche weniger Störkonturen auf. Die Transportrollen 8 weisen jeweils eigene Drehachsen 10 und Schwenkachsen 12 auf und sind jeweils mit einstellbarer Drehzahl und einstellbarer Drehrichtung um ihre jeweiligen Drehachsen 10 rotierbar. Die Transportrichtung 34 einer Transportrolle 8 wird eingestellt, indem die Transportrolle 8 mit ihrer Drehachse 10 um einen Schwenkachsenwinkel 14 um ihre Schwenkachse 12 gedreht wird. Um ein umfangreiches, über ein gerichtetes und gleichartiges Fördern aller Transportrollen 8 hinausgehendes Manipulieren des Güterstroms zu ermöglichen, können mindestens zwei der Transportrollen 8 einer Fördereinheit 2 voneinander abweichend einstellbar angesteuert werden. Durch die voneinander abweichende und/ oder übereinstimmende Ansteuerung der Transportrollen 8 einer Fördereinheit 2 können die Güter 4' auf dem Förderstreckenabschnitt 13 so hinsichtlich ihrer Position und/ oder Ausrichtung manipuliert werden, dass der ungeordnete ursprüngliche Güterstrom in einen geordneten Güterstrom der Güter 4 überführt wird. Die Transportrollen 8 einer Fördereinheit 2 umfassen jeweils individuell ansteuerbare Antriebe, die beispielsweise als Servoantrieb ausgestaltet sind.

Die Förderbänder 25a, 25b, Rollenmodule 23 und Fördereinheiten 2 sind jeweils mit eigenen Steuereinheiten 20', 20 assoziiert und werden in Abhängigkeit vom erfassten Güterstrom koordiniert von der übergeordneten Steuereinrichtung 21 angesteuert. Die untergeordneten Steuereinheiten 20 der Fördereinheiten 2 sind ausgestaltet zum individuellen und/ oder zumindest teilweise übereinstimmenden Regeln von Transportrichtung 34 und Transportgeschwindigkeit der Transportrollen 8 einer Fördereinheit 2 durch Einstellen von Drehzahl, Drehrichtung und/ oder Schwenkachsenwinkel 14. Die untergeordneten Steuereinheiten 20' regeln die Drehzahl und/ oder Drehrichtung der Förderbänder 25a, 25b bzw. Rollenmodule 23.

Eine oder mehrere der Detektionseinheiten 36 erfassen abschnittsweise die durch das zuführende Förderband 25a auf den Förderstreckenabschnitt 13 zugeförderten Güter 4' des ursprünglichen Güterstroms. Die übergeordnete Steuereinrichtung 21 steuert die Fördereinheiten 2, die Förderbänder 25a, 25b und die Rollenmodule 23 bzw. ihre Steuereinheiten 20', 20 in Antwort auf die Erfassung des ursprünglichen Güterstroms an. Eine Ansteuerung in Antwort auf die Erfassung des ursprünglichen Güterstroms bedeutet, dass die Ansteuerung abhängig von der relativen Anordnung, Ausrichtung und/ oder Fördergeschwindigkeit der Güter 4' des ursprünglichen Güterstroms erfolgt. Die erwünschte Ausgestaltung des geordneten Güterstroms betreffend Abstand, Spuranzahl samt Abförderrichtung 9 und Anordnung sowie eine gegebenenfalls erforderliche Zwischenspeicherung der Güter 4 bestimmt hierbei die Ansteuerung, wobei die übergeordnete Steuereinrichtung 21 wird manuell oder automatisiert kontrolliert werden kann. Bei einer Zwischenspeicherung ist der geordnete Güterstrom auf dem Förderstreckenabschnitt 13eine dichte Anordnung der Güter 4 nebeneinander und/ oder hintereinander. Bei geringem Speicherbedarf werden die Güter 4 dicht hintereinander angeordnet, ein gegebenenfalls weiter hinten im Fluss des Fördersystems 1 erforderlicher größerer Abstand wird erst beim Abfördern des geordneten Güterstroms vom Förderstreckenabschnitt 13 eingestellt. Bei großem Speicherbedarf werden die Güter 4 dicht hintereinander und nebeneinander angeordnet, so dass der geordnete Güterstrom auf dem Förderstreckenabschnitt eine verdichtete Flächenanordnung von Gütern 4 ist.

Auf dem Förderstreckenabschnitt 13 von Figur 1 werden die nicht entlang der Haupttransportrichtung 22 ausgerichteten Güter 4 rotiert und mittig auf der Förderstrecke 3 mit regelmäßigem Abstand als eine den geordneten Güterstrom ausbildende Reihe hintereinander positioniert. Anschließend wird der geordnete Güterstrom vom zweiten Förderband 25b in Abförderrichtung 9 transportiert.

Anstelle einer Reihe könnten die Güter 4 auch in zwei oder drei Reihen nebeneinander angeordnet werden und der Abstand kann variiert werden. Ein Sonderfall liegt vor, wenn ein Anwendungsfall kein kompliziertes Manipulieren des Güterstroms erfordert. Dieser Fall liegt vor, wenn die Anordnung der Güter 4' des ursprünglichen Güterstroms bereits einer für die Güter 4 des geordneten Güterstroms erwünschten Anordnung entspricht. In diesem Fall umfasst das Manipulieren durch die Fördereinheiten 2 auch ein einfaches lineares Transportieren entlang der Haupttransportrichtung 22. Die übergeordnete Steuereinrichtung 21 steuert die lokalen Steuereinheiten 20 an.

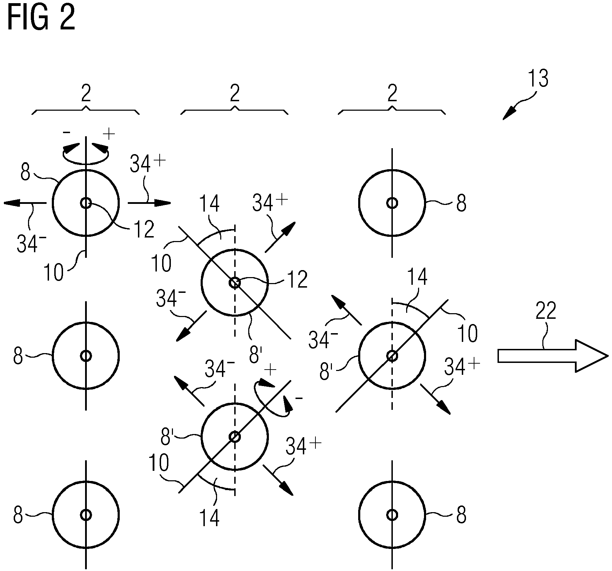

Figur 2 zeigt einen Ausschnitt der Transportrollen 8, 8' von drei Fördereinheiten 2 eines Förderstreckenabschnitts 13 eines weiteren Fördersystems 1 gemäß einer Ausführungsform der Erfindung. Die Transportrollen 8, 8' weisen jeweils eigene Drehachsen 10 und Schwenkachsen 12 auf, wobei die Drehachsen 10 der Transportrollen 8, 8' durch Rotation um ihre jeweiligen Schwenkachsen 12 um einen eigenen Schwenkachsenwinkel 14 verstellbar sind. Die Schwenkachsen 12 sind orthogonal zur Haupttransportrichtung 22 angeordnet. Der Schwenkachsenwinkel 14 wird so definiert, dass bei einem Schwenkachsenwinkel 14 von 0° und positiver Drehrichtung eine Transportrolle 8 eine mit der Haupttransportrichtung 22 übereinstimmende Transportrichtung 34⁺ aufweist, bei negativer Drehrichtung resultiert eine Transportrichtung 34⁻ entgegen der Haupttransportrichtung 22.

Drei Transportrollen 8' weisen von null abweichende Schwenkachsenwinkel 14 auf. Wenn ein Gut 2 auf zwei oder mehr Transportrollen 8 aufliegt und diese gleichzeitig mit positiver bzw. negativer Drehrichtung angetrieben werden, wird das Gut 4 rotiert. Durch Anpassung der Transportgeschwindigkeiten kann das Rotieren überlagert während eines weiteren Transport im Wesentlichen entlang der Haupttransportrichtung 22, aber auch entlang weiterer Richtungen, erfolgen. Ein besonders effizientes und gutschonendes Rotieren erfolgt, indem die Rotationsgeschwindigkeit abhängig vom Abstand zum Drehmittelpunkt des Gutes 4 angepasst wird und weiter außen liegende Transportrollen 8 mit höherer Drehzahl angesteuert angetrieben werden. Ein besonders zielgerichtetes und vielfältiges Manipulieren wird ermöglicht, indem die Schwenkachsenwinkel 14 kontinuierlich eingestellt werden. Eine stufenlose Einstellung der Schwenkachsenwinkel 14 mit wahlfreien Winkelwerten zwischen 0° und 360° ermöglicht eine sehr genaue Regelung der Transportrichtungen 34.

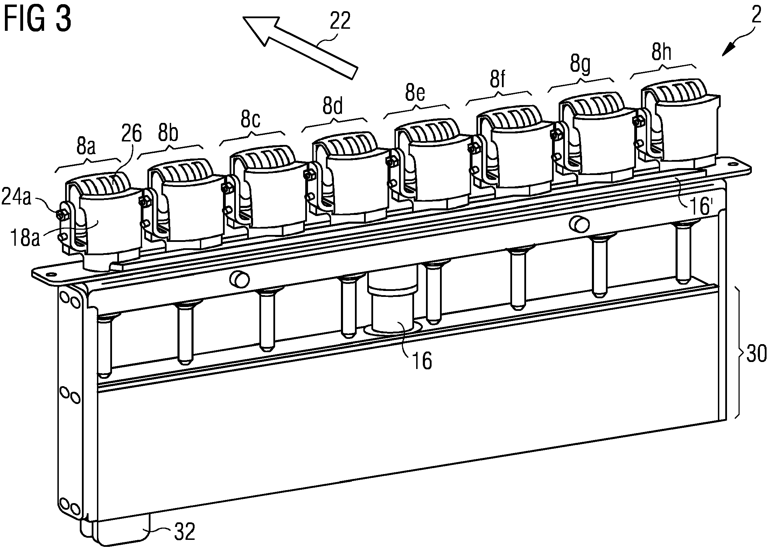

Figur 3 zeigt eine modulare Fördereinheit 2 zur Verwendung in einem erfindungsgemäßen Fördersystem 1 mit geordnet entlang einer Linie angeordneten Transportrollen 8a - 8h. Die Fördereinheit 2 umfasst Transportrollenlagerungen 24a - 24h für die einzelnen Transportrollen 8a - 8h und jeweils als Außenmotor ausgestaltete Antriebsmittel 18a - 18h für die einzelnen Transportrollen 8a - 8h. Die modulare Fördereinheit 2 weist eine gemeinsame Verstellvorrichtung 16 mit einer Verstellvorrichtungsachse 16' für das gleichzeitige Verstellen der Drehachsen 10a - 10h aller Transportrollen 8a - 8h auf. Die Schwenkachsenwinkel 14 der Transportrollen 8a - 8h dieser Fördereinheit 2 werden somit gemeinsam verstellt. Durch eine voneinander abweichende Ansteuerung der Antriebsmittel 18a - 18h wird dennoch ein vielfältiges Manipulieren ermöglicht. Die modulare Fördereinheit 2 umfasst zudem eine kompakt verbaute Elektronikeinheit 30, welche neben einer Steuereinheit 20 für die dargestellte modulare Fördereinheit 2 zudem eine Verbindungsvorrichtung 32 zum unkomplizierten Verbinden mit einer übergeordneten Steuerung 21 des Fördersystems 1 umfasst. Die Elektronikeinheit 30 umfasst noch weitere, der elektronischen Steuerung und der Spannungsversorgung dienende Komponenten.

Die Verbindungsvorrichtung 32 ist als Steckverbindung ausgestaltet, so dass ein Einbau der Fördereinheit 2, insbesondere das Verbinden mit der übergeordneten Steuerung 21, besonders unkompliziert ist. Beim Einstecken erfolgt eine automatische Kontaktierung zwischen Fördereinheit 2 und übergeordnetem Fördersystem 1. Durch die Modularität der Fördereinheit 2 eignet sich die Fördereinheit 2 zum Einbau in eine Vielzahl an Fördersystemen 1, da Wartung, Einbau und Ausbau der Fördereinheiten 2 nur geringe Fachkenntnisse erfordert. Durch Einbau einer auf die Dimension des betreffenden Fördersystems 1 angepassten Anzahl an Fördereinheiten 2 kann einfach ein zum Manipulieren ausgestalteter Förderstreckenabschnitt 13 maßgeschneidert werden.

Die Antriebsmittel 18a - 18h sind als separat ansteuerbare Außenmotoren ausgestaltet, die gleichzeitig als Klemmschutz für zusätzliche Sicherheit agieren. Antriebsmittel 18a, Transportrolle 8a und Transportrollenlagerung 24a stellen ein integriertes Bauteil dar. Die Transportrollen 8a - 8h weisen teilweise einen umlaufenden Reibbelag 26 für eine verbesserte Haftwirkung zwischen Transportrolle 8 und Gut 4 auf, so dass die Übertragung der Bewegung der Transportrolle 8 auf das Gut optimiert ist. Der Reibbelag ist dauerfest ausgestaltet und somit besonders wartungsarm.

Um ein Gut 4 zu rotieren, können die Antriebsmittel 18e - 18h der rechts außen positionierten Transportrollen 8e - 8h mit positiver Drehzahl und somit positiver Drehrichtung, die Antriebsmittel 18a - 18d der links außen positionierten Transportrollen 8a - 8d mit negativer Drehzahl und somit negativer Drehrichtung angesteuert angetrieben werden. Durch eine Ansteuerung der Antriebsmittel 18a - 18h mit unterschiedlichen Drehzahlen und/ oder Drehrichtung kann das Gut 4 mit hoher Variabilität transportiert und währenddessen in seiner Ausrichtung manipuliert werden. Ein Zusammenspiel mehrerer modularer Fördereinheiten 2 durch koordiniertes Ansteuern ihrer Steuereinheiten 20 erlaubt ein vielfältiges Manipulieren.

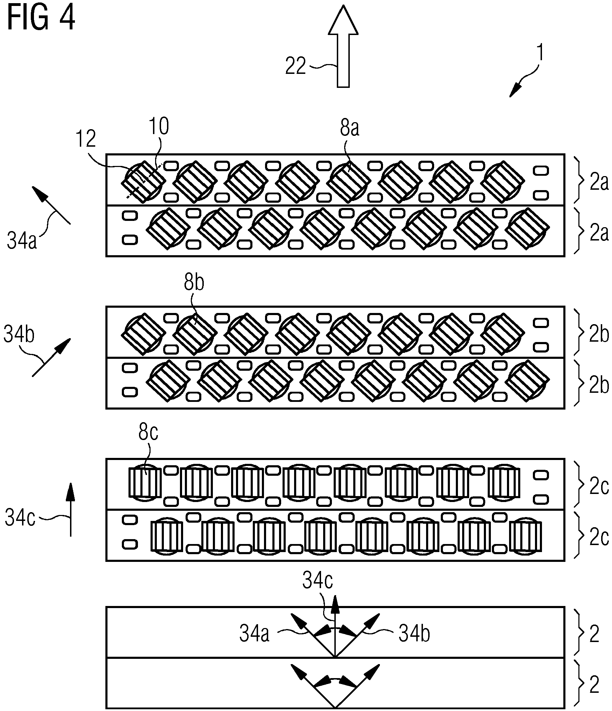

Figur 4 zeigt jeweils zwei als lineare Rollenzeile ausgestaltete Fördereinheiten 2a - 2c und ihre möglichen Transportrichtungen 34a - 34c gemäß einer Ausführungsform der Erfindung zur Veranschaulichung einer in den nachfolgenden Figuren verwendeten vereinfachende Darstellung von Fördereinheiten 2. Die gezeigten Fördersysteme 1 sind allesamt ausgestaltet, ein Verfahren zum derartigen Manipulieren der Güter eines ursprünglichen Güterstroms durchzuführen, dass der ursprüngliche Güterstrom in einen geordneten Güterstrom überführt wird. Eine Fördereinheit 2a umfasst hier acht Transportrollen 8a mit individuell regelbarem integriertem Motor als Vortrieb, die jeweils in einer gabelförmigen Aufnahme als Lenkung sitzen, die wiederum jeweils zentral vertikal gelagert sind. Die Gabeln können zur Lenkung der Güter 4 ansteuerbar um einen Schwenkachsenwinkel 14 geschwenkt werden. Die Schwenkachsenwinkel 14 sind auf einen Bereich von +-45° eingeschränkt, wobei die Transportrollen 8a - 8c einer Fördereinheit 2a -c vorwärts mit positiver Drehzahl und/ oder rückwärts mit negativer Drehzahl laufen können. Zur Vereinfachung der Darstellung sind nur die Transportrichtungen 34a - 34c bei positiver Drehzahl eingezeichnet, bei negativer Drehzahl werden entgegengesetzt gerichtete Transportrichtung 34⁻ erzielt. Die Fördereinheiten 2 der nachfolgenden Zeichnungen sind im Wesentlichen analog aufgebaut, wobei diese weder eine Einschränkung der Schwenkachsenwinkel 14, noch die genaue Anzahl an Transportrollen 8 aufweisen müssen. Auch können die Transportrollen 8 einer Fördereinheit 2 hinsichtlich Drehzahl und/ oder Schwenkachsenwinkel 14 voneinander abweichend und/ oder übereinstimmend einstellbar ausgestaltet sein.

Die Transportrollen 8a der beiden oberen Fördereinheiten 2a von Figur 4 sind so eingestellt, dass sie in der zeichnerischen Darstellung gesehen nach links oben mit der Transportrichtung 34a fördern, die Transportrollen 8b der zweitobersten Fördereinheiten 2b fördern nach rechts oben mit der Transportrichtung 34b und die Transportrollen 8c der dritten Gruppe von Fördereinheiten 2c fördern nach rechts oben mit der Transportrichtung 34c. Die untersten zwei Fördereinheiten 2 zeigen eine vereinfachte Darstellung für alle Zustände von links bis rechts oben fördernd über den gesamten Schwenkbereich bei positiver Drehzahl, wobei die einstellbaren Schwenkachsenwinkel 14 zwischen -45° und +45° liegen. Die Transportrollen 8 können auch rückwärts laufen, allerdings sind die zugehörigen Transportrichtungen 34⁻ der Übersichtlichkeit halber zeichnerisch nicht dargestellt.

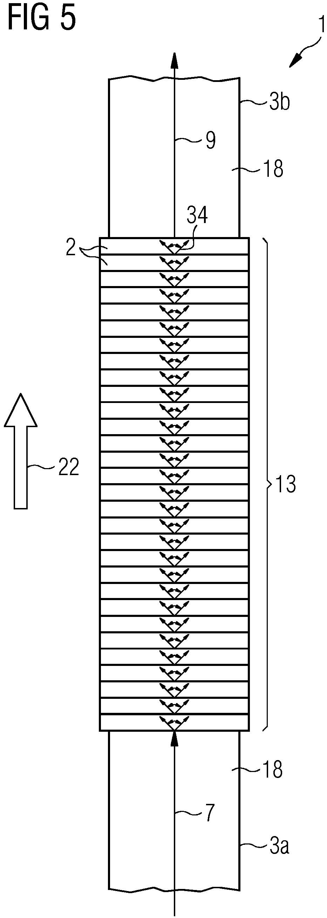

Figur 5 zeigt gemäß noch einer weiteren Ausführungsform der Erfindung ein Fördersystem 1 umfassend eine zuführende Förderstrecke 3a, eine abführende Förderstrecke 3b sowie einen Förderstreckenabschnitt 13 mit modular und linear ausgestalteten, orthogonal zur Haupttransportrichtung 22 angeordneten Fördereinheiten 2. Ein ursprünglicher Güterstrom wird von einem stetig laufenden Antriebsmittel 18 der zuführenden Förderstrecke 3a in Zuförderrichtung 7 hin zum Förderstreckenabschnitt 13 gefördert und nach dem Manipulieren durch die Fördereinheiten 2 von einem weiteren Antriebsmittel 18 der abführenden Förderstrecke 3b in Abförderrichtung 9 abtransportiert. Die Fördereinheiten 2 bilden eine Förderfläche, die eine Vielzahl von Gütern 4 des ursprünglichen Güterstroms linear transportieren, aber auch einlagern, speichern und gemäß Anforderung manipulieren und im Anschluss weiter in Abförderrichtung 9 transportieren können. Die Hauptfunktionalität dieser Ausführungsform besteht vor allem im Speichern und Ausgleichen von Unregelmäßigkeiten hinsichtlich Abstand, Position und Ausrichtung. Ein oder mehrere Güter 4 werden zwischengespeichert, indem die betreffenden guttragenden Transportrollen 8 stark verlangsamt angetrieben werden oder stillstehen. Bei ausreichend breiter Dimensionierung des Förderstreckenabschnitts 13 können die Güter 4 auch nebeneinander positioniert oder durch Vorbeifahren einzelner Güter 4 hinsichtlich ihrer Abfolge in begrenztem Ausmaß korrigiert werden. Güter 4 können aneinander vorbeigefahren werden, indem beispielsweise die in der zeichnerischen Ansicht links angeordneten Transportrollen 8 einer oder mehrerer Fördereinheiten 2 koordiniert zeitweise stillstehen bzw. langsamer angetrieben werden und die rechts liegenden Transportrollen 8 weiter angetrieben werden bzw. schneller angetrieben werden. Um ein dynamisches Speichern zu ermöglichen, werden die Transportrollen 8 einer und/ oder mehrerer Fördereinheiten 2 mit abnehmender und/ oder zunehmender Drehzahl angesteuert.

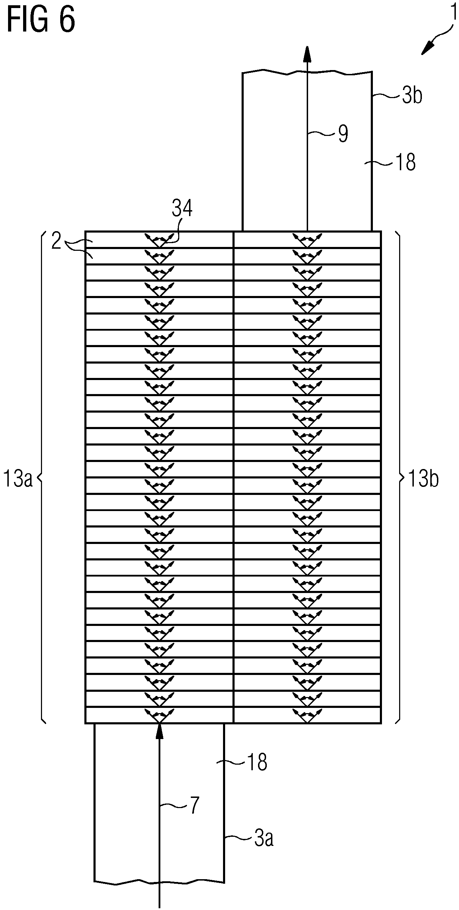

Figur 6 zeigt ein weiteres erfindungsgemäßes Fördersystem 1 das zwei versetzte Förderstrecken 3a, 3b aufweist. Das Fördersystem 1 weist zwei parallele Förderstreckenabschnitte 13a, 13b auf, die linear hintereinander und nebeneinander angeordnete Fördereinheiten 2 umfassen und so eine größere Förderfläche als die in Figur 5 gezeigte ausbilden. Durch Ansteuerung der Fördereinheiten 2 wird der ursprüngliche Güterstrom linear und transversal versetzt, was in der zeichnerischen Aufsicht gesehen einem Transport der Güter 4 nach rechts und zugleich nach oben entspricht. Die Lenkfunktion der Transportrollen 8 erfolgt in dieser Ausführungsform zeilenweise je Fördereinheit 2, wobei die Transportrollen 8 dennoch mit unterschiedlicher Drehzahl und Drehrichtung angesteuert werden. Somit ist nicht nur ein Transport nach rechts und links möglich, sondern auch ein Rotieren einzelner Güter während des Transportierens. Die übergeordnete Steuerung 21 steuert die Fördereinheiten 2 so an, dass die Güter 4 entlang einer durch die Zuförderrichtung 7 der zuführenden Förderstrecke 3a und die Abförderrichtung 9 der abführenden Förderstrecke 3b bestimmten Flussrichtung transportiert werden. Die Güter 4 können hierbei so manipuliert werden, dass sie mit unveränderter Ausrichtung nach rechts oben transportiert werden oder sie können in der Art eines Autos eine Rechtskurve vollziehen.

Eine weitere Ausführungsform ist eine Ausgestaltung des Fördersystems 1 wie in Figur 6, wobei jedoch der zweite Förderstreckenabschnitt 13b eine beliebige Fördervorrichtung sein kann, die ausgestaltet ist, die Bewegungsvektoren eines Gutes 4 auf dem ersten Förderstreckenabschnitt 13a zu übernehmen. Auf diese Weise kann ein Gut 4 ohne zu rutschen verdrehungsfrei von dem ersten Förderstreckenabschnitt 13a auf den zweiten Förderstreckenabschnitt 13b übergeben werden. Sobald das Gut 4 vollständig übergeben wurde, wird die Querförderung des zweiten Förderstreckenabschnitts 13b eingestellt und das Gut 4 einzig weiter entlang der Abförderrichtung 9 transportiert. In diesem Fall agiert das Fördersystem 1 als Quergurtsorter, wobei das Gut 4 auf dem ersten Förderstreckenabschnitt 13a ausgerichtet wurde und die Ausrichtung beim Übergeben und Weitertransport konserviert wurde.

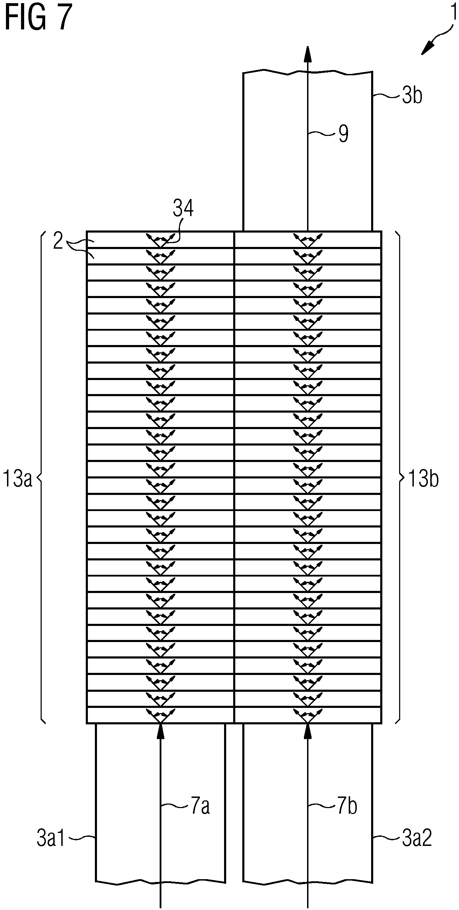

Figur 7 zeigt noch ein Fördersystem 1 gemäß einer weiteren Ausführungsform der Erfindung, wobei die Funktionalität des Fördersystems im Vergleich zum Fördersystem von Figur 6 um das Zusammenführen zweier ursprünglicher Güterströme zu einem geordneten Güterstrom ergänzt wurde. Die Güter 4 werden von den zwei voneinander verschiedenen zuführenden Förderstrecken 3a1, 3a2 entlang der Zuförderrichtungen 7a, 7b auf die Förderstreckenabschnitte 13a, 13b gefördert. Die Fördereinheiten 2 der beiden Förderstreckenabschnitte 13a, 13b werden dann koordiniert so angesteuert, dass die Güter 4 zu einem einzigen geordneten Güterstrom vereinigt werden, der auf der abführenden Förderstrecke 3b entlang der Abförderrichtung 9 abtransportiert wird. Beim Zusammenführen zweier Güterströme können die Güter 4 zudem zwischenzeitlich gespeichert und ausgeglichen werden. Die Fördereinheiten 2 bilden eine gemeinsame Förderfläche zwischen den zuführenden Förderstrecken 3a1, 3a2 und der abführenden Förderstrecke 3b aus.

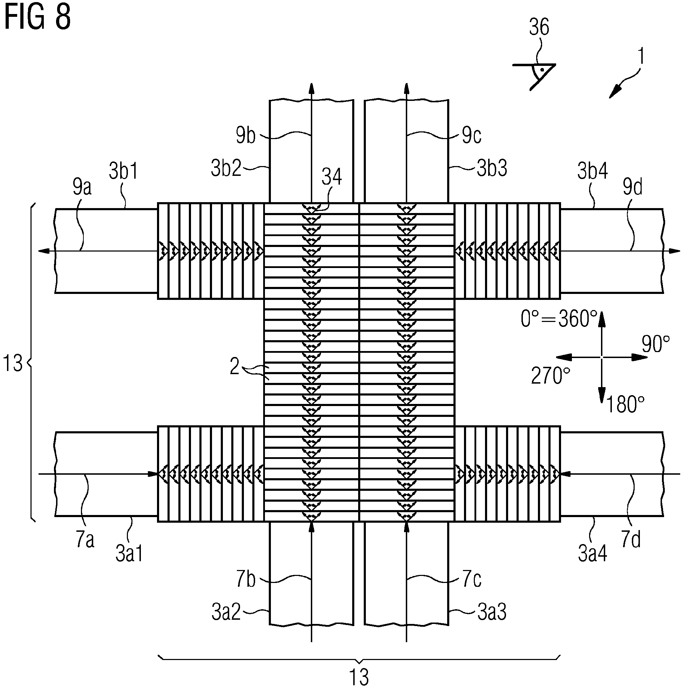

Figur 8 zeigt gemäß noch einer weiteren Ausführungsform der Erfindung ein Fördersystem 1, welches einen als totale Kreuzung ausgestalteten Förderstreckenabschnitt 13 umfasst. Das Fördersystem 1 umfasst vier zuführende Förderstrecken 3a1-3a4 sowie vier abführenden Förderstrecken 3b1 - 3b4. Der Förderstreckenabschnitt 13 umfasst wiederum hintereinander und nebeneinander angeordnete Fördereinheiten 2. Weder die Zuförderrichtungen 7a - 7d, noch die Abförderrichtungen 9a - 9d stimmen überein. Als ursprünglicher Güterstrom werden mindestens sämtliche Güter 4' angesehen, die auf den zuführenden Förderstrecken 3a1 - 3a4 transportiert werden können, der geordnete Güterstrom umfasst mindestens sämtliche Güter 4, die auf den abführenden Förderstrecken 3b1 - 3b4 transportiert werden können. Der Begriff des Güterstroms umfasst somit auch mehrere einzelne, auf unterschiedlichen Förderstrecken 3a1-3a4, 3b1 - 3b4 transportierten Güterströme. Auf dem Förderstreckenabschnitt 13 wird der ursprüngliche Güterstrom in einen geordneten Güterstrom überführt. Für diese komplexe Anordnung, aber auch für die weiter oben dargestellten Ausführungsformen, ist eine Überwachung des Fördersystems 1 mit mindestens einer Detektionseinheit 36 hilfreich und nötig. Die Detektionseinheit 36 kann optisch überwachen, möglich ist jedoch auch ein Erfassen des Volumengewichts, beispielsweise indem die Detektionseinheit 36 als Dim-Weight-Scan-Tunnel ausgestaltet ist, des Formats und der Position der Güter 4 auf den zuführenden Förderstrecken 3a1 - 3a4 und einer Zuweisung einer Identifikationsnummer zu jedem Gut 4 durch die Detektionseinheit 36 und Weiterleitung an die übergeordnete Steuereinrichtung 21. Ohne Überwachung ist ein gezieltes und kontrolliertes Manipulieren der Güter 4 nur schwer möglich.

Durch die zeilenweise erfolgende Lenkungsfunktion der Transportrollen 8 der Fördereinheiten 2 und die individuelle Vortriebsregelbarkeit jeder Transportrolle 8 können die Güter 4 linear und transversal versetzt und von jeder der zuführenden Förderstrecken 3a1 - 3a4 auf jede der abführenden Förderstrecken 3b1 - 3b4 transportiert werden. Die Güter 4 werden hierbei linear und/ oder transversal versetzt, sowie bei Bedarf rotiert. Die Transportrollen 8 der Fördereinheiten 2 des Förderstreckenabschnitts 13 können hierbei stillstehen oder mit geringer Geschwindigkeit entlang der eingestellten Transportrichtung 34 rotiert werden. Vor dem Überführen eines Gutes 4 auf eine der abführenden Förderstrecken 3b1 - 3b4 werden dann die das Gut 4 tragenden Transportrollen 8 individuell beschleunigt. Hierdurch wird das betreffende Gut 4 vom ursprünglichen Güterstrom getrennt. Das so vereinzelte Gut 4 kann anschließend als Teil des geordneten Güterstroms auf die betreffende abführende Förderstrecke 3b seitlich versetzt und übergeben werden.

Bei einer Beschränkung des Schwenkachsenwinkels auf einen Bereich zwischen -45° und +45° werden technisch sinnvolle Winkel zwischen zuführenden und abführenden Förderstrecken 3a, 3b sowie dem Förderstreckenabschnitt 13 vorgegeben. Die zuführenden Förderstrecken 3a1 - 3a4 könnten aus einem Winkel zwischen 135° und 225° in den Förderstreckenabschnitt 13 münden, die abführenden Förderstrecken 3b1 - 3b4 könnten in einem Winkel zwischen 315° und 45° an den Förderstreckenabschnitt 13 angeschlossen sein. Hier sind jedoch nur rechtwinklig zum Förderstreckenabschnitt 13 anschließende Förderstrecken 3a1 - 3b4 gezeigt.

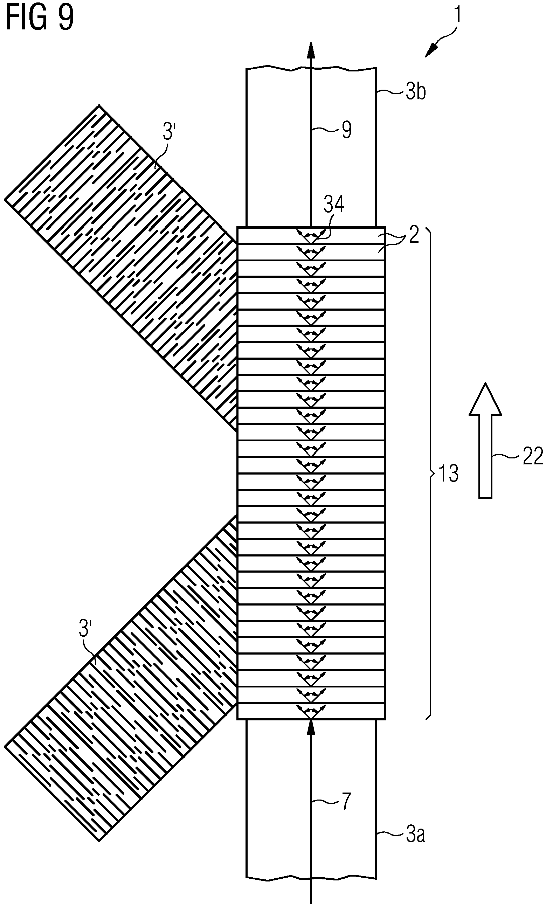

Figur 9 zeigt ein weiteres Fördersystem 1 gemäß einer Ausführungsform der Erfindung. Das Fördersystem 1 weist einen analogen Aufbau wie dasjenige von Figur 5 auf, wobei der Förderstreckenabschnitt 13 wie bei einem traditionellen Merger oder Splitter auch zusätzlich noch von zwei weiteren Förderstrecken 3' schräg mit Gütern 4 versorgt bzw. entsorgt wird. Die weiteren Förderstrecken 3' können als ebene Förderbänder, aber auch als abgestufte Rollenbahnstrecken oder als schräge Streifenbänder ausgestaltet sein. Diese können jedoch gegebenenfalls Störkonturen aufweisen, an denen sich Güter 4 verhaken können und so zu Staus des Güterstroms führen könnten. Die wesentliche Förderrichtung des Güterstroms entlang dem Förderstreckenabschnitt 13 stimmt mit der Haupttransportrichtung 22 der Fördereinheiten 2 überein und sei hier formal als 0° definiert.

Je nach Anwendungsfall können ein oder mehrere der erfindungsgemäßen Förderstreckenabschnitte 13 der Fördersysteme 1 von Figur 1, 4-9 als beliebige Fördervorrichtungen, beispielsweise als einfache Linearförderer oder als Transportrutschen, ausgestaltet sein.

### Bezugszeichenliste

- 1: Fördersystem
- 2: Fördereinheit
- 3: Förderstrecke
- 4: Gut
- 7: Zuförderrichtung
- 8: Transportrolle
- 9: Abförderrichtung
- 10: Drehachse
- 12: Schwenkachse
- 13: Förderstreckenabschnitt
- 14: Schwenkachsenwinkel
- 16: Verstellvorrichtung
- 16': Verstellvorrichtungsachse
- 18: Antriebsmittel
- 20: Steuereinheit
- 21: Steuereinrichtung
- 22: Haupttransportrichtung
- 23: Rollenmodul
- 24: Transportrollenlagerung
- 25: Förderband
- 26: Reibbelag
- 30: Elektronikeinheit umfassend Steuereinheit 20
- 32: Verbindungsvorrichtung
- 34: Transportrichtung
- 36: Detektionseinheit

## Patentansprüche

1. Verfahren zum Manipulieren eines ursprünglichen Güterstroms auf einer Förderstrecke (3) eines Fördersystems (1), wobei
- die Förderstrecke (3) einen Förderstreckenabschnitt (13) aufweist, der mindestens eine für den Transport des Güterstroms vorgesehene Fördereinheit (2) umfasst;
- die Fördereinheit (2) Transportrollen (8) umfasst, die jeweils eigene Drehachsen (10) und Schwenkachsen (12) aufweisen und mit einstellbarer Drehzahl und einstellbarer Drehrichtung um ihre jeweiligen Drehachsen (10) rotierbar sind und die Drehachsen (10) der Transportrollen (8) um ihre jeweiligen Schwenkachsen (12) um einen eigenen Schwenkachsenwinkel (14) durch Rotation verstellbar sind;
- die Fördereinheit (2) so ansteuerbar ist, dass mindestens zwei der Transportrollen (8) einer Fördereinheit (2) voneinander abweichend verstellbar sind;
umfassend die Verfahrensschritte:
a) der ursprüngliche Güterstrom wird erfasst;
b) der Güterstrom wird zumindest teilweise dem Förderstreckenabschnitt (13) zugefördert;
c) die Fördereinheiten (2) werden so angesteuert, dass der ursprüngliche Güterstrom in einen geordneten Güterstrom überführt wird; und
d) der geordnete Güterstrom wird in Abförderrichtung transportiert.

2. Verfahren nach Anspruch 1, **dadurch gekennzeichnet, dass** der Förderstreckenabschnitt (13) zwei oder mehr koordiniert ansteuerbare Fördereinheiten (2) umfasst.

3. Verfahren nach einem der Ansprüche 1 bis 2, **dadurch gekennzeichnet, dass**
die Transportrollen in positiver und/ oder negativer Drehrichtung und mit übereinstimmender und/ oder unterschiedlicher Drehzahl angesteuert werden.

4. Verfahren nach einem der Ansprüche 1 bis 3, **dadurch gekennzeichnet, dass**
die Drehachse (10) im Wesentlichen parallel zur Hauptförderrichtung angeordnet ist und die Schwenkachse (12) im Wesentlichen orthogonal zur Hauptförderrichtung angeordnet ist.

5. Verfahren nach einem der Ansprüche 1 bis 4, **dadurch gekennzeichnet, dass**
die Schwenkachsenwinkel (14) von zwei oder mehr Transportrollen (8) einer Fördereinheit (2) gemeinsam verstellt werden.

6. Verfahren nach einem der Ansprüche 1 bis 5, **dadurch gekennzeichnet, dass**
die Fördereinheiten (2) in Antwort auf die Erfassung des ursprünglichen Güterstroms angesteuert werden.

7. Verfahren nach einem der Ansprüche 1 bis 6, **dadurch gekennzeichnet, dass**
die Schwenkachsenwinkel (14) kontinuierlich einstellbar sind.

8. Verfahren nach einem der Ansprüche 1 bis 7, **dadurch gekennzeichnet, dass**
die Transportrollen (8) einer Fördereinheit (2) mit abnehmender und/ oder zunehmender Drehzahl ansteuerbar sind.

9. Verfahren nach einem der Ansprüche 1 bis 8, **gekennzeichnet durch**
ein zwischenzeitliches Stillstehen einzelner oder aller Transportrollen (8) einer Fördereinheit (2).

10. Verfahren nach einem der Ansprüche 1 bis 9, **dadurch gekennzeichnet, dass**
der ursprüngliche Güterstrom eine Zuförderrichtung (7) aufweist, die nicht mit der Abförderrichtung (9) des geordneten Güterstroms übereinstimmt.

11. Fördersystem (1) zum Manipulieren eines ursprünglichen Güterstroms entlang einer Förderstrecke (3) des Fördersystems (1), wobei
- die Förderstrecke (3) einen Förderstreckenabschnitt (13) aufweist, der mindestens eine für den Transport des Güterstroms vorgesehene Fördereinheit (2) umfasst;
- die Fördereinheit (2) Transportrollen (8) umfasst, die jeweils eigene Drehachsen (10) und Schwenkachsen (12) aufweisen und mit einstellbarer Drehzahl und einstellbarer Drehrichtung um ihre jeweiligen Drehachsen (10) rotierbar sind und die Drehachsen (10) der Transportrollen (8) um ihre jeweiligen Schwenkachsen (12) um einen eigenen Schwenkachsenwinkel (14) durch Rotation verstellbar sind;
- die Fördereinheit (2) so ansteuerbar ist, dass mindestens zwei der Transportrollen (8) einer Fördereinheit (2) voneinander abweichend verstellbar sind; und
- das Fördersystem (1) eine Steuereinrichtung (21) umfasst, die zum derartigen Ansteuern der Fördereinheit (2) ausgestaltetet ist, dass der ursprüngliche Güterstrom in einen geordneten Güterstrom überführbar ist.

12. Fördersystem (1) nach Anspruch 11, zudem umfassend eine Detektionseinheit (36) zum Erfassen des ursprünglichen Güterstroms und/ oder des geordneten Güterstroms (5).

13. Fördersystem (1) nach einem der Ansprüche 11 bis 12, **dadurch gekennzeichnet, dass**
die Steuereinrichtung (21) zum Ansteuern der Fördereinheit (2) in Abhängigkeit vom ursprünglichen Güterstrom ausgestaltet ist.

14. Fördersystem (1) nach einem der Ansprüche 11 bis 13, **dadurch gekennzeichnet, dass**
der Förderstreckenabschnitt (13) zwei oder mehr koordiniert ansteuerbare Fördereinheiten (2) umfasst.

15. Fördersystem (1) nach einem der Ansprüche 11 bis 14, **dadurch gekennzeichnet, dass**
die Schwenkachsenwinkel (14) kontinuierlich einstellbar sind.
